Europäisches Patentamt

**European Patent Office**

Office européen des brevets

(19)

(11) Numéro de publication: **0 271 399**
**B1**

(12) **FASCICULE DE BREVET EUROPEEN**

(45) Date de publication du fascicule du brevet:
**24.01.90**

(21) Numéro de dépôt: **87402654.5**

(22) Date de dépôt: **24.11.87**

(51) Int. Cl.⁴: **B29C 47/08, B23P 19/02**

(54) **Procédé et installation de montage et démontage des vis d'une machine d'extrusion.**

(30) Priorité: **02.12.86 FR 8616817**

(43) Date de publication de la demande:
**15.06.88 Bulletin 88/24**

(45) Mention de la délivrance du brevet:
**24.01.90 Bulletin 90/4**

(84) Etats contractants désignés:
**DE ES FR GB IT SE**

(56) Documents cités:
**DD-B- 125 257**
**DE-C- 3 611 113**
**FR-A- 2 560 817**
**US-A- 2 807 080**
**US-A- 3 283 699**
**US-A- 3 908 258**
**US-A- 4 348 799**

(73) Titulaire: **CLEXTRAL, Tour Fiat 1 place de la Coupole,
F-92400 Courbevoie(FR)**

(72) Inventeur: **Vannier, Jean, Les Charmilies,
F-71190 Mesvres Etang Sur Arroux(FR)**

(74) Mandataire: **Lanceplaine, Jean-Claude et al, CABINET
LAVOIX 2, Place d'Estienne d'Orves, F-75441 Paris
Cédex 09(FR)**

## Description

La présente invention a pour objet un procédé et une installation de montage et de démontage des vis d'une machine d'extrusion.

Les machines d'extrusion ou extrudeuses sont généralement constituées d'une ou plusieurs vis entraînées en rotation à l'intérieur d'un fourreau allongé dans lequel sont ménagés des alésages cylindriques pour le logement des vis. Celles-ci sont munies sur leur périphérie de filets en hélice qui entraînent en aval la matière introduite par une extrémité amont du fourreau. En jouant sur le pas des vis, on peut soumettre la matière à différents traitements par exemple de trituration, de malaxage ou de compression. La matière est ainsi entraînée jusqu'à l'extrémité aval du fourreau qui peut être munie d'une filière d'extrusion ou bien d'un simple orifice de sortie dans le cas où la matière ne doit pas être soumise à une extrusion.

Pour faire varier le traitement réalisé au cours de l'avancement de la matière dans le fourreau, les vis sont constituées de zones successives ayant des filets de pas ou de formes différents. Par exemple, on pourra utiliser des sections de convoyage à pas large ou des sections à pas resserré ou même inversé pour réaliser un freinage et par conséquent une compression de la matière.

Il est souvent nécessaire de modifier l'arrangement des sections à pas différents, par exemple pour réaliser un changement ou un adaption du processus de traitement. D'autre part, les filets peuvent être détériorés ou soumis à une usure importante par exemple dans le cas où la matière transportée est particulièrement abrasive. Cette usure est évidemment plus importante dans les zones les plus comprimées.

Il est donc nécessaire de pouvoir changer ou remplacer certaines sections des vis.

A cet effet, les vis sont généralement constituées de tronçons creux juxtaposés et enfilés sur un arbre central relié à un moteur d'entraînement en rotation. Pour que la rotation de l'arbre soit transmise aux tronçons de vis, ceux-ci sont munis, sur leur paroi interne, de rainures qui s'engagent dans les cannelures correspondantes ménagées le long de l'arbre central.

L'entraxe et le guidage en rotation des vis sont généralement assurés par un palier fixe monté à l'une des extrémités des arbres et par un palier flottant monté à l'autre extrémité.

De plus, le fourreau qui enveloppe lesdites vis est constitué de plusieurs parties indépendantes dont le plan de séparation passe par l'axe des vis. Cette particularité offre une accessibilité aisée aux vis en place, permettant, entre autres, d'effectuer un contrôle de l'état de surface des filets, un nettoyage et un dépannage, et notamment le montage et le démontage des vis.

Or, une vis complète, constituée par des tronçons empilés sur l'arbre cannelé, représente une masse importante.

Jusqu'à présent, le montage et le démontage des vis, ainsi que le remplacement des tronçons défectueux, sont réalisés par un ensemble de matériels inadaptés pouvant provoquer la détérioration des cannelures des arbres de vis au moment de la pose et de la dépose des tronçons et par une succession d'opérations longues et fastidieuses.

La présente invention a donc pour objet un procédé qui permet d'exécuter de manière fiable et avec précision la pose et la dépose de l'ensemble vis-palier et le remplacement des tronçons de vis.

Conformément à l'invention, le procédé de montage et démontage des vis d'une machine d'extrusion comprenant deux vis entraînées en rotation et guidées à chacune de leurs extrémités par un palier, chaque vis étant constituée d'un arbre central d'entraînement sur lequel sont enfilés une pluralité de tronçons cerux munis sur leur paroi interne de rainures s'engageant dans des cannelures correspondantes de l'arbre central et, sur leur périphérie, d'organes de traitement tels que des filets hélicoïdaux est caractérisé en ce qu':

- on extrait à l'aide d'un moyen de levage l'ensemble vis-palier de la machine d'extrusion, et on pose cet ensemble sur une table de travail préalablement préparée pour recevoir simultanément les deux vis et munie d'organes réglables de support desdites vis,
- on effectue le démontage des paliers et on met en place sur l'une des extrémités des deux arbres un calibre de repérage de la position des cannelures et de maintein de l'entraxe des vis et sur l'autre extrémité un fourreau protecteur,
- on réalise un contrôle dimensionnel des filets des tronçons de vis pour déterminer les tronçons défectueux à remettre en état ou à remplacer,
- on enlève de la table de travail les vis et on prépare ladite table de travail pour la mise en place d'une vis,
- on pose la première vis sur la table de travail, on procède à l'extraction successive des tronçons à l'aide d'un outillage approprié et d'un lève-tronçon simple, puis on réalise la même opération sur la seconde vis,
- puis, après avoir retiré le second arbre cannelé de la table de travail, on prépare ladite table pour la mise en place des deux arbres cannelés,
- on pose les deux arbres cannelés sur la table de travail, et on remet en place sur l'une de leurs extrémités le calibre pour positionner lesdits arbres cannelés par rapport à la position d'origine des cannelures,
- on emmanche simultanément, par l'intermédéiaire d'un lève-tronçon double, un nouveau tronçon sur chaque arbre cannelé, et on renouvelle l'opération pour chaque paire de nouveau tronçon,
- on procède au démontage du fourreau protecteur de chaque arbre et du calibre,
- on remet en place le palier correspondant à chaque extrémité des arbres,
- et enfin, on effectue le remontage de l'ensemble vis-palier dans la machine d'extrusion.

L'invention a également pour objet une installation pour la mise en oeuvre du procédé, caractérisée en ce qu'elle comprend un moyen de levage de l'ensemble vis-palier de la machine d'extrusion, une table de travail munie d'organes réglables de support desdites vis, un ensemble d'extraction des tronçons de vis, un lève-tronçon simple pour la dépose de chaque tronçon extrait de l'arbre cannelé de la vis, et un lève-tronçon double pour emmancher simultanément une paire de nouveaux tronçons sur les deux arbres cannelés des vis.

D'autres caractéristiques et avantages de la présente invention apparaîtront au cours de la description qui va suivre, faite en référence aux dessins annexés, sur lequels :

- la figure 1 est une vue schématique en élévation latérale et arrachement partiel montrant l'ensemble vis-palier soulevé par un organe de levage,
- la figure 2 est une vue en élévation latérale d'une table de travail sur laquelle repose l'ensemble vis-palier,
- la figure 3 est une vue en élévation latérale de la table de travail avec les deux vis après enlèvement des paliers,
- la figure 4 est une vue de dessus de la figure 3,
- la figure 5 est une vue en coupe selon la ligne 5-5 de la figure 3,
- la figure 6 est une vue en coupe selon la ligne 6-6 de la figure 3,
- la figure 7 est une vue en coupe selon la ligne 7-7 de la figure 3,
- la figure 8 est une vue en élévation latérale de la table de travail équipée pour l'extraction des tronçons d'une vis,
- la figure 9 est une vue de dessus de la figure 8,
- la figure 10 est une vue en coupe selon la ligne 10-10 de la figure 8,
- la figure 11 est une vue en coupe selon la ligne 11-11 de la figure 8,
- la figure 12 est une vue en coupe d'un organe de butée pour l'extraction d'un tronçon de vis,
- la figure 13 est une vue en coupe des deux demi-coquilles d'extraction d'un tronçon de vis,
- la figure 14 est une vue en coupe du porte-coquilles,
- la figure 15 est une vue en perspective d'un lève-tronçon simple,
- la figure 16 est une vue en coupe d'un lève-tronçon double.

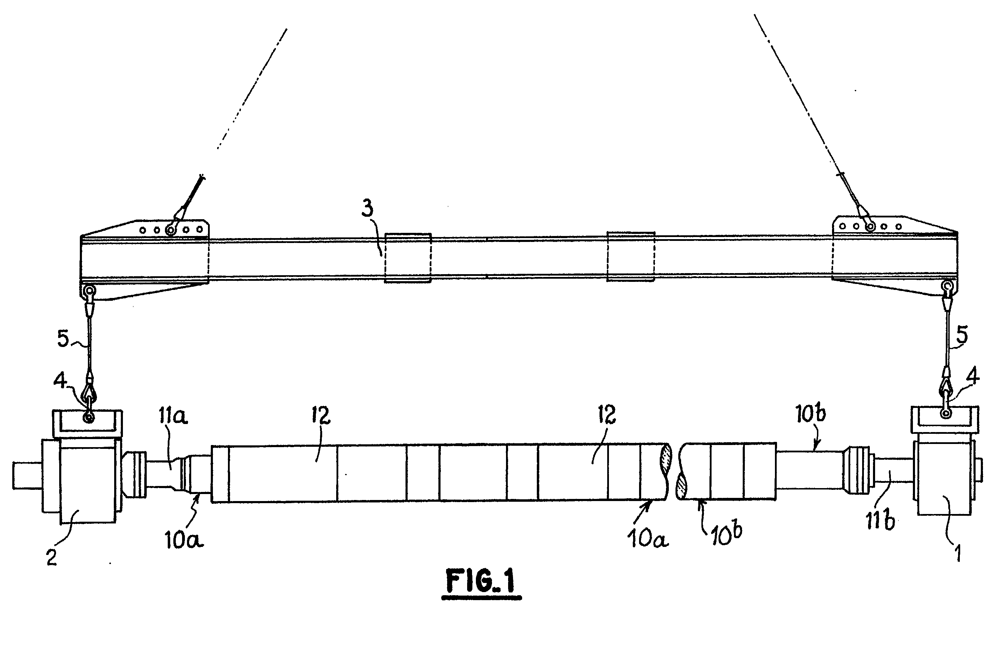

En se reportant tout d'abord à la figure 1, on voit que l'ensemble vis-palier d'une machine d'extrusion se compose de deux vis 10a et 10b à axes parallèles, engrènant l'une dans l'autre et entraînées en rotation.

Chque vis 10a et 10b est constituée d'un certain nombre de tronçons juxtaposés 12 qui sont enfilés sur un arbre, respectivement 11a et 11b entraînés en rotation par un moyen non repésenté sur la figure. A cet effet, les tronçons de vis 12 sont munis d'un alésage interne sur lequel sont ménagées des rainures longitudinales s'engageant sur les cannelures des arbres 11a et 11b permettant de transmettre le couple de rotation aux tronçons de vis.

Les vis 10a et 10b sont guidées à l'une des extrémités par un palier flottant 1 et à l'autre extrémité par un palier fixe 2.

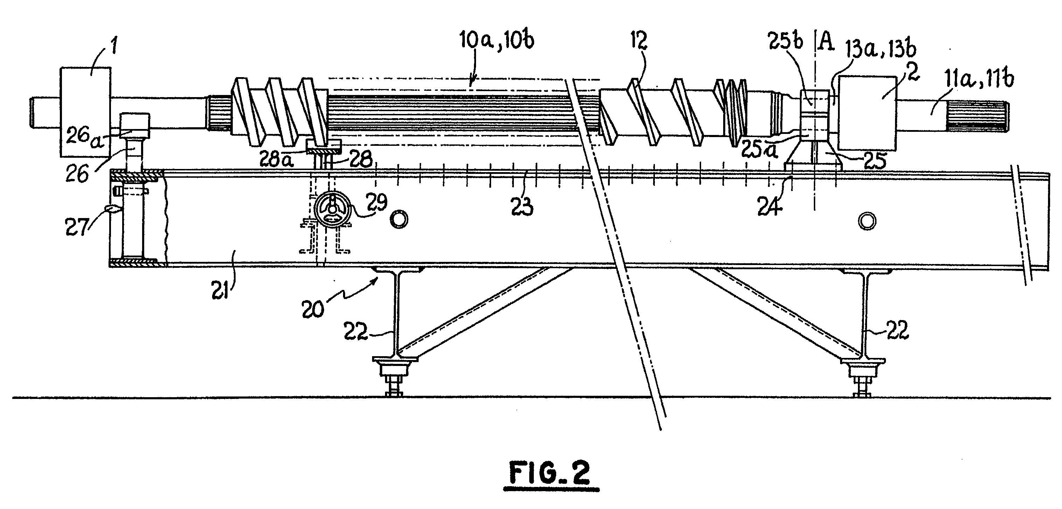

Pour la dépose de l'ensemble vis-palier de la machine d'extrusion, on accroche les paliers 1 et 2 à un palonnier 3 à l'aide de manilles 4 et d'élingues 5, puis on soulève cet ensemble et on le transporte jusqu'à une table de travail désignée par la référence 20 à la figure 2.

La table de travail 20 se compose d'un bâti 21 reposant sur le sol par des pieds 22 et comportant un plateau horizontal 23 sur lequel sont ménagés, sur toute sa longueur et de part et d'autre de l'axe longitudinal, des petits trous 24 pour la fixation de divers organes dans différentes positions en fonction des opérations à effectuer, comme on le verra ultérieurement.

La table de travail 20 comporte d'un côté un premier support 25 fixé sur la surface horizontale 23 et dont la position est réglable longitudinalement grâce aux petits trous 24 et de l'autre côté un second support 26 réglable en hauteur par un organe de manoeuvre 27. D'autre part, la table 20 comporte également un support intermédiaire 28 réglable en hauteur par un organe de manoeuvre 29.

Les supports 25, 26 et 28 peuvent être équipés d'une tête amovible double ou simple de façon à recevoir les deux vis 10a et 10b en même temps ou séparément.

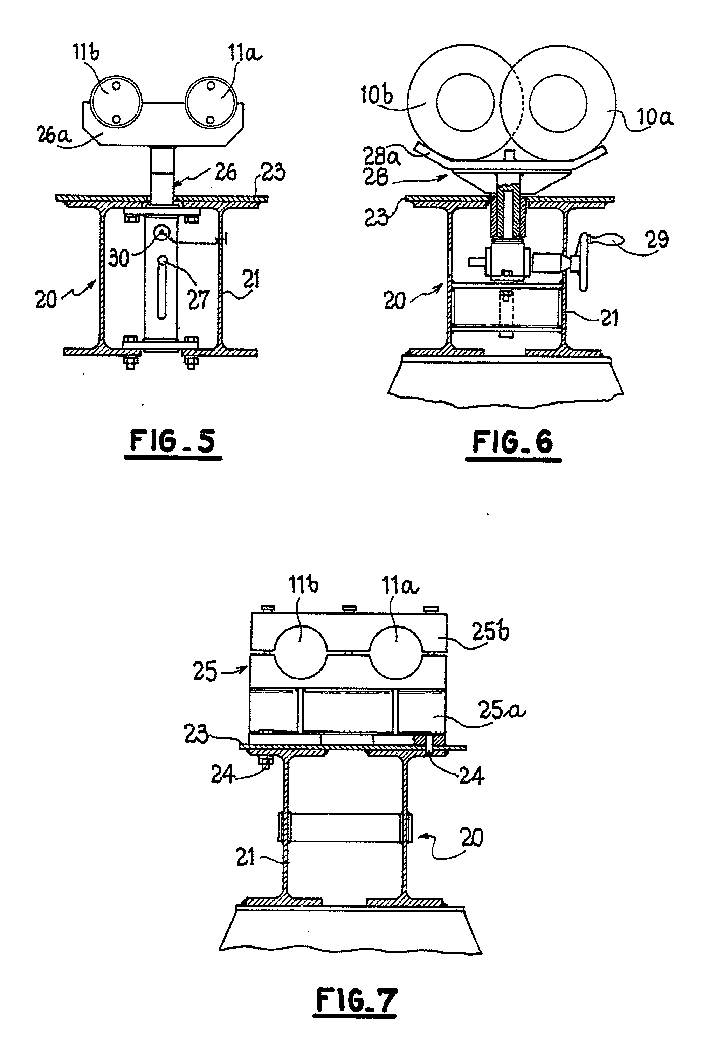

Avant de poser l'ensemble vis-palier sur la table de travail 20, on équipe chaque support 25, 26 et 28 d'une tête double respectivement 25a, 26a et 28a (figures 5 à 7) et on règle le support 26 en position haute, bloqué par une goupille 30, le support 28 en position basse, et on fixe le support 25 dans la position A tel que représenté sur la figure 2.

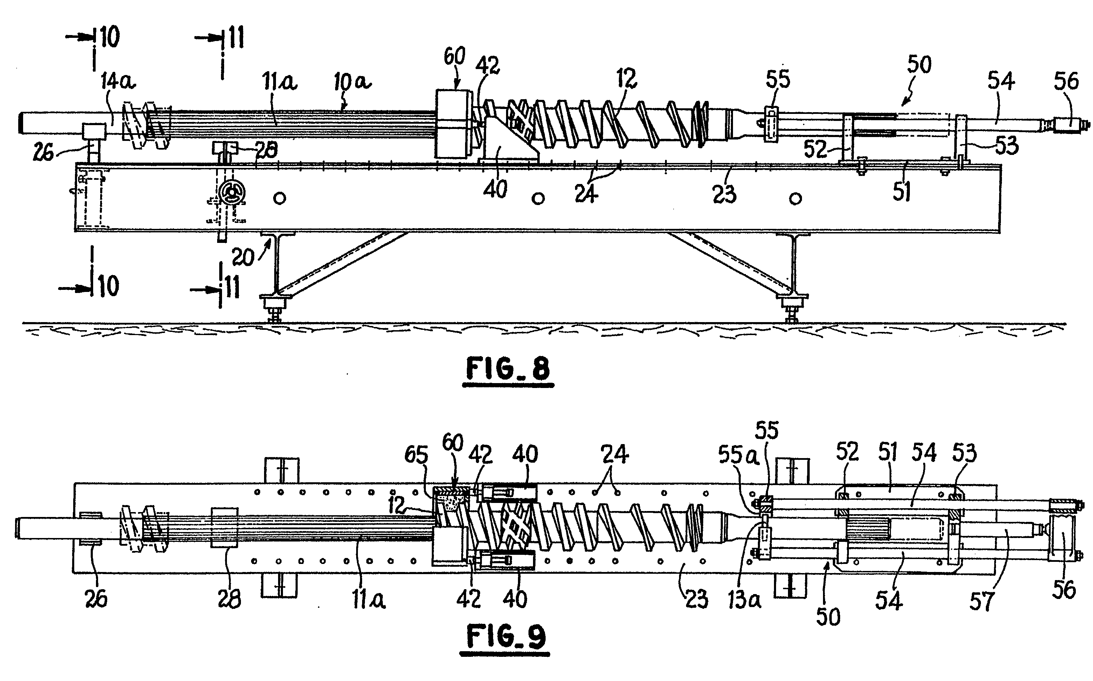

Après avoir effectué cette préparation, on pose à l'aide du palonnier 3 l'ensemble vis-palier sur la table de travail 20 de telle manière que les extrémités des arbres 11a et 11b reposent dans les logements des têtes doubles 25a et 26a des supports 25 et 26, et que la face latérale des collerettes 13a et 13b desdits arbres vienne en contact avec la tête double 25a, puis on fixe sur ladite tête double 25a un chapeau 25b pour le maintien des deux vis (figure 7).

On procède on démontage du palier flottant 1 et du palier fixe 2.

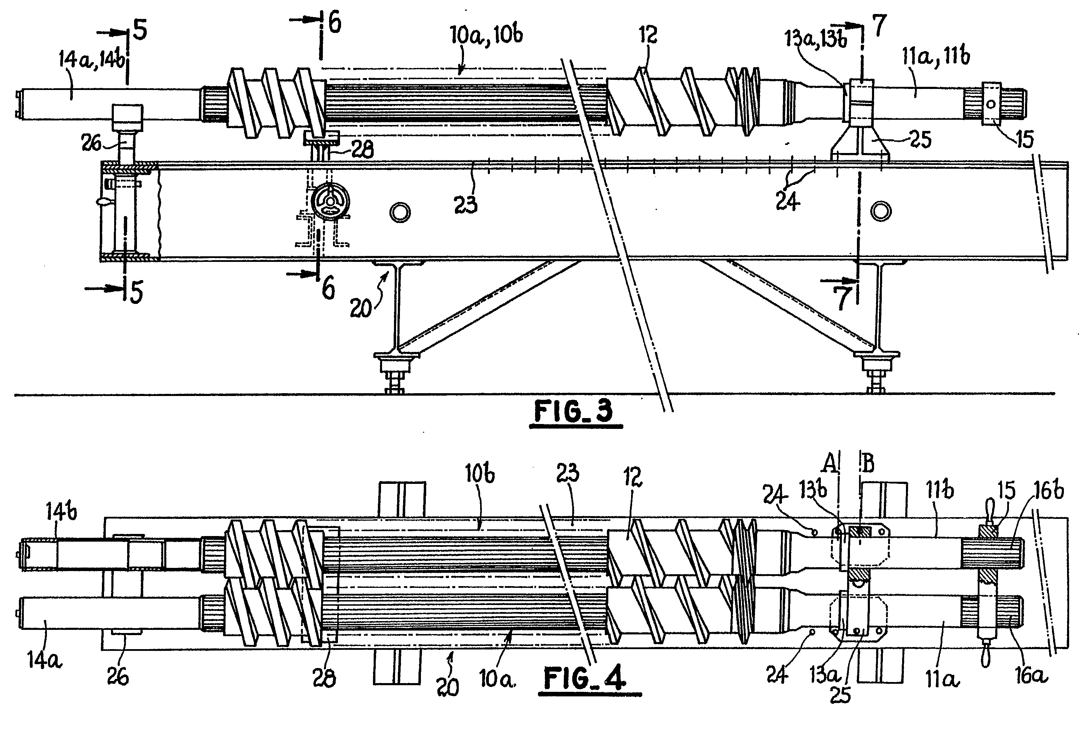

Comme représenté sur les figures 3 et 4, dès le démontage des paliers effectué, on met en place sur l'extrémité de chaque arbre 11a et 11b, côté palier flottant, un fourreau protecteur respectivement 14a et 14b comprenant chacun une butée de fond et vissé sur l'extrémité de l'arbre. Sur l'autre extrémité des arbres, côté palier fixe, on introduit un calibre 15 comportant deux alésages internes parallèles dont l'entraxe correspond à l'entraxe des arbres 11a et 11b. Ces orifices internes comportent des rainures longitudinales qui s'engagent sur les cannelures 16a et 16b des arbres 11a et 11b.

Ensuite, après avoir enlevé le chapeau 25b du support 25, on soulève les deux vis 10a et 10b à l'aide du calibre 15, on déplace le support 25 pour l'amener dans la position B de l'autre côté des collerettes 13a et 13b, on repose les vis sur le support 25 et on fixe de nouveau le chapeau 25b.

On effectue alors différentes opérations de contrôle dimensionnel sur les vis 10a et 10b. Ces opérations consistent notamment à mesurer par des moyens appropriés le diamètre à fond de filet, le diamètre extérieur, le jeu entre flancs de filet et ont généralement pour but de définir s'il est possible d'effectuer une remise en état des tronçons ou bien si les tronçons défectueux doivent être changés.

Par ailleurs, le calibre 15 donne la position des cannelures 16a et 16b pour le remontage ultérieur.

Après les différentes vérifications, on démonte le calibre 15 et le chapeau 25b du support 25, on enlève séparément les vis 10a et 10b qui sont stockées hors de la table de travail 20 et on prépare ladite table en vue de l'extraction du tronçon 12 de chaque vis d'extrusion.

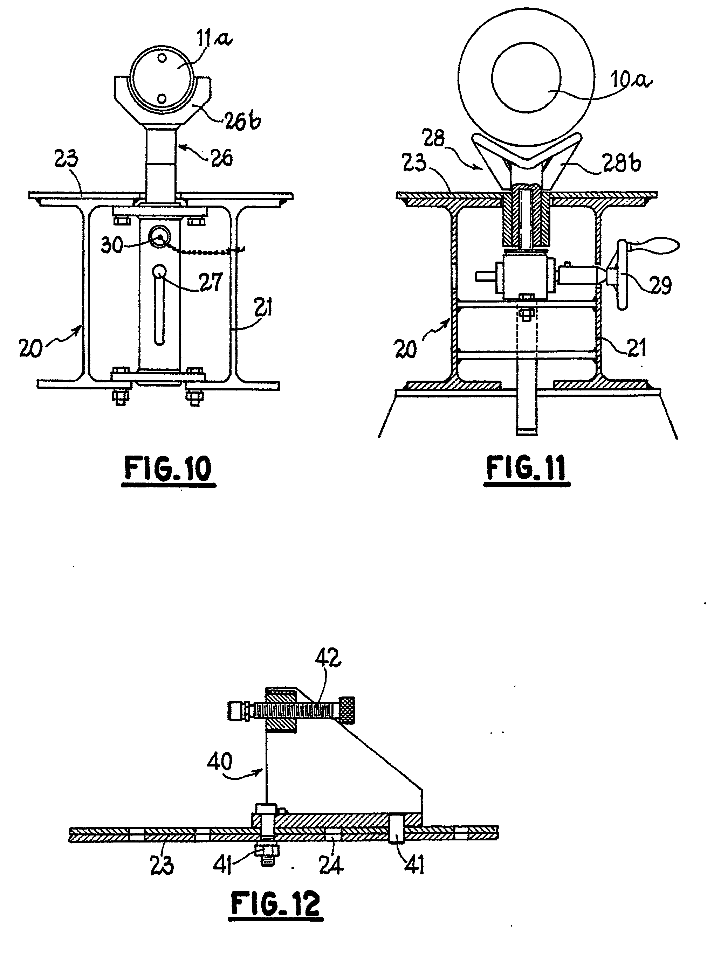

A cet effet, on équipe les supports 26 et 28 de tête simple, respectivement 26b et 28b (figures 10 et 11) on bloque le support 26 en position haute au moyen de la goupille 30, le support 28 étant en position basse, on enlève le support 25 et on monte sur le plateau horizontal 23 de la table de travail les différents organes d'extraction des tronçons de vis. Ces oranges d'extraction se composent tout d'abord de deux équerres amovibles 40 et d'un système de traction 50 (figures 8 et 9). Les deux équerres comportent, à leur partie inférieure, des moyens 41 de fixation dans les petits trous 24 de la table de travail et à leur partie supérieure une vis horizontale 42 d'appui réglable axialement, à hauteur d'axe de la vis d'extrusion (figure 12).

Le système de traction 50 comprend un socle 51 sur lequel sont fixés un support 52 comportant un évidement central pour l'arbre de la vis d'extrusion et une butée 53. Ce système comprend également, de part et d'autre de l'axe central, deux tirants 54 longitudinaux et parallèles. Les deux tirants 54 coulissent dans le support 52 et dans la butée 53 et sont reliés entre eux à l'une de leurs extrémités par une bague 55 munie d'un logement interne 55a pour recevoir la collerette 13a ou 13b des vis d'extrusion, et à l'autre extrémité par une butée 56. Un vérin 57 est monté entre la butée 53 solidaire du socle 51 et la butée 56 solidaire des deux tirants 54.

Sur les figures 8 et 9, on a représenté à titre d'exemple l'extraction d'un tronçon situé sur la partie centrale de la vis, en supposant que les tronçons précédents ont déjà été extraits. L'opération d'extraction décrite ci-après est identique pour tous les tronçons de vis.

Pour réaliser l'extraction des tronçons, on monte donc tout d'abord sur la table de travail les deux équerres 40 dans une position provisoire, puis le système de traction 50.

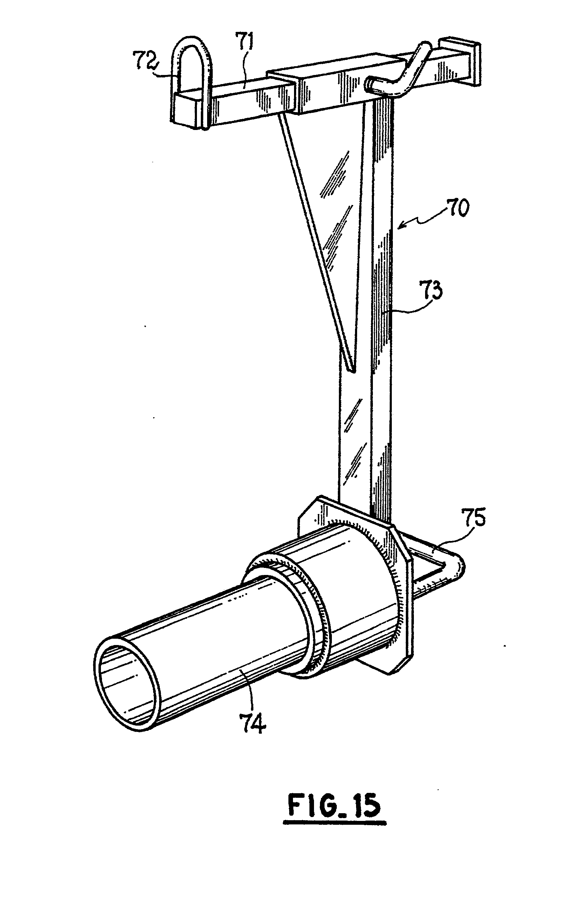

Ensuite, on positionne la première vis d'extraction 10a sur ladite table, de telle manière que l'arbre cannelé 11a repose d'un côté sur le support 26 et de l'autre côté, la collerette 13a vient se placer dans le logement 55a de la bague 55. Les tirants 54 supportent par l'intermédiaire de la bague 55 le poids, côté palier fixe, de l'arbre 11a équipé ou non d'éléments de vis 12. Ainsi, il n'y a pas de frottement entre l'arbre 11a et le support 52 du système d'extraction 50. On emmanche sur l'extrémité de l'arbre cannelé 11a, du côté du support 26, un fourreau protecteur 14a, un porte-coquille 60 (figure 14) constitué par un cadre cylindrique 61 comportant sur l'un de ses côtés un petit rebord 62 percé d'un orifice central 63 pour le passage de la vis 10a.

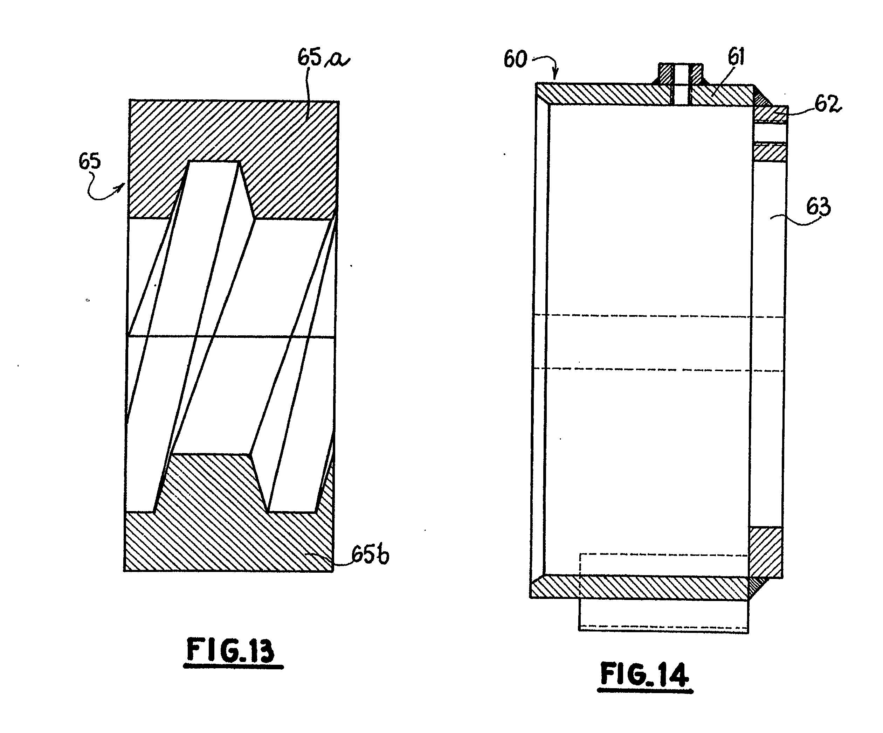

Pour l'introduction de ce porte-coquille 60, on monte le support 28 afin de maintenir la vis 10a, on descend le support 26, on glisse le porte-coquille 60 entre les deux supports 26 et 28, puis on remonte le support 26, on descend le support 28 et on glisse ledit porte-coquille sur le tronçon de vis 12. On met en place sur le tronçon à extraire une coquille 65 formée de deux demi-coquilles 65a et 65b obtenues à partir d'un matériau composite (figure 13). Cette coquille comporte un profil interne identique au profil des filets du tronçon de vis à extraire.

Après avoir mis en place les deux demi-coquilles sur le tronçon, en emmanche le porte-coquille 60 sur les demi-coquilles, on fixe les deux équerres 40 sur la table de travail 20 juste derrière le porte-coquille et on amène les vis 42 desdites équerres on contact sur le rebord 62 du porte-coquille.

Ces différentes opérations de préparation étant terminées, on branche un groupe d'alimentation, non représenté, sur le vérin 57 et on met ledit vérin sous pression.

Le vérin 57 exerce une poussée sur la butée 56 ce qui a pour effet d'exercer une traction sur l'arbre 11a de la vis d'extrusion par l'intermédiaire des tirants 54, de la bague 55 et de la collerette 13a. Le tronçon 12 à extraire étant bloqué par le porte-coquille 60 et les équerres 40, l'arbre 11a coulisse sous l'action du vérin 57 provoquant ainsi le déblocage dudit tronçon par rapport aux cannelures de l'arbre. En ramenant le vérin 57 en position initiale, l'arbre 11a coulisse en sens inverse et le tronçon 12 s'écarte des vis 42 des équerres 40.

Ensuite, il suffit de démonter le porte-coquille 60 et la coquille 65, puis de faire glisser le tronçon 12 pour l'amener entre les supports 26 et 28.

L'enlèvement du tronçon 12 s'effectue à l'aide d'un lève-tronçon simple 70 tel que représenté à la figure 15.

Ce lève-tronçon simple 70 se compose d'un bras horizontal 71 muni d'un crochet 72 et supportant une potence verticale 73. La potence verticale 73 comporte à sa partie inférieure d'un part un cylindre 74 de même diamètre que le fourreau protecteur 14a emmanché sur l'arbre 11a de la vis d'extrusion et d'autre part une poignée de préhension 75.

Pour la dépose du tronçon 12, on accroche le lève-tronçon simple 70 à un organe de levage quelconque par l'intermédiaire du crochet 72 et on le place en bout et dans l'alignement de l'arbre 11a. On monte le support 28, on descend le support 26 et on fait glisser le tronçon 12 pour l'amener sur le cylindre 74 du lève-tronçon 70. Le tronçon à extraire est trans porté jusqu'à un poste de travail pour une éventuelle remise en état ou jusqu'à une zone de stockage.

Ces différents opérations sont renouvelées pour chaque tronçon à extraire de la vis 10a et sont également répétées pour la seconde vis 10b.

L'opération inverse de remise en place des tronçons de vis sur les deux arbres cannelés s'effectue de la manière suivante.

Tout d'abord, on équipe les supports 26 et 28 avec la tête double 26a et 28a (figures 5 et 6), et on remonte le support 25 sur la table de travail 20 dans la position B (figure 3). On pose les deux arbres cannelés 11a et 11b de telle manière qu'ils reposent sur les supports 26 et 28 et que le collerette 13a et 13b de chaque arbre soit en appui sur la face latérale du support 25. On oriente les arbres cannelés par rapport à la position d'origine des cannelures, précédemment repérée et on emmanche sur l'extrémité des arbres, côté palier fixe, le calibre 15, puis on fixe le chapeau 25b sur le support 25 qui bloque les arbres 11a et 11b en position.

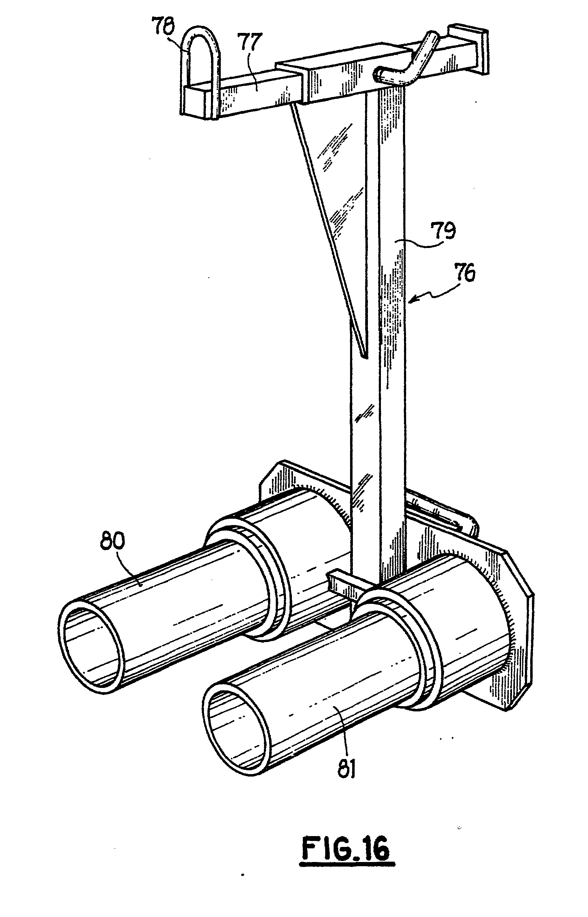

Le remontage des tronçons de vis sur les arbres cannelés 11a et 11b s'effectue en utilisant un lève-tronçon double 76 tel que représenté à la figure 16. Ce lève-tronçon 76 comporte, de manière identique au lève-tronçon simple, un bras horizontal 77, un crochet 78 et une potence verticale 79. Par contre, la potence verticale 79 supporte deux cylindres parallèles 80 et 81 dont les diamètres extérieurs correspondent au diamètre extérieur des fourreaux protecteurs 14a et 14b. Au moment du remontage des tronçons 12, on introduit sur chaque cylindre 80 et 81 un tronçon et on amène le lève-tronçon 76 en bout et dans l'alignement des arbres 11a et 11b. On monte le support 28 et on descend le support 26, puis on fait glisser simultanément un nouveau tronçon sur chaque arbre cannelé 11a et 11b entre les support 26 et 28. On remonte le support 26 et on descend le support 28, on glisse la paire de tronçons engrenant l'un dans l'autre jusqu'à leur poisition sur les arbres cannelés et on renouvelle l'opération pour chaque paire de nouveaux tronçons.

Une fois que l'ensemble des tronçons a été remonté et serré axialement par des écrous vissés sur les deux arbres, on replace le support 25 dans la position A (figure 2), on remonte le support 28 et on descend le support 26, et on procède au démontage des fourreaux protecteurs 14a et 14b du calibre 15.

La dernière opération consiste à remonter sur les vis 10a et 10b le palier fixe 2, puis le palier flottant 1 et enfin à replacer l'ensemble vispalier dans la machine d'extrusion à l'aide du palonnier 3.

Cette succession d'opérations permet d'exécuter la pose et la dépose de l'ensemble vis-palier d'une machine d'extrusion de grandes dimensions et de poids important et le remplacement des tronçons de vis avec rapidité et précision. De plus, la conception de cet ensemble est telle que le remplacement des tronçons écarte tout risque de basculement du tronçon de vis, ce qui évite, entre autres, la détérioration des cannelures et s'effectue avec une grande souplesse.

En effet, il est possible, grâce à cet ensemble et avec deux jeux d'arbres, de préparer à l'avance une paire de vis complète de rechange, d'effectuer le moment venu uniquement la permutation entre les vis usagées et rénovées. Cette opération n'entraîne que la manutention de l'ensemble vis-paliers, le démontage et le remontage des paliers sur les nouvel les vis. L'intervention est donc très courte par rapport à la rénovation d'un jeu de vis et elle conduit à un temps minimum d'arrêt de la machine.

## Revendications

1.- Procédé de montage et de démontage des vis d'une machine d'extrusion comprenant deux vis (10a, 10b) entraînées en rotation et guidées à chacune de leurs extrémités par un palier (1, 2), chaque vis étant constituée d'un arbre central (11a, 11b) d'entraînement sur lequel sont enfilés une pluralité de tronçons creux (12) munis sur leur paroi interne de rainures s'engageant dans des cannelures (16a, 16b) correspondantes de l'arbre central et, sur leur périphérie, d'organes de traitement tels que des filets héicoïdaux, caractérisé en ce qu' :
- on extrait à l'aide d'un moyen de levage (3) l'ensemble vis-palier de la machine d'extrusion, et on pose cet ensemble sur une table de travail (20) préalablement préparée pour recevoir simultanément les deux vis (10a, 10b) et munie d'organes réglables (25, 26, 28) de support desdites vis,
- on effectue le démontage des paliers (1, 2) et on met en place sur l'une des extrémités des deux arbres (11a, 11b) un calibre (15) de repérage de la position des cannelures et de maintien de l'entraxe des vis et sur l'autre extrémité un fourreau protecteur (14a, 14b),
- on réalise un contrôle dimensionnel des filets des tronçons de vis (12) pour déterminer les tronçons défectueux à remettre en état ou à remplacer,
- on enlève de la table de travail (20) les vis (10a, 10b) et on prépare ladite table de travail pour la mise en place d'une vis,
- on pose la première vis (10a) sur la table de travail et on procède à l'extraction successive des tronçons (12) à l'aide d'un outillage (40, 50, 60, 65) approprié et d'un lève-tronçon simple (70), puis on réa lise la même opération sur la seconde vis (10b),
- puis, après avoir retiré le second arbre cannelé (11b) de la table de travail (20), on prépare ladite table pour la mise en place des deux arbres cannelés (11a, 11b),
- on pose les deux arbres cannelés (11a, 11b) sur la table de travail (20), et on remet en place sur l'une de leurs extrémités le calibre (15) pour positionner lesdits arbres cannelés par rapport à la position d'origine des cannelures,
- on emmanche simultanément, par l'intermédiaire d'un lève-tronçon double (76), un nouveau tronçon sur chaque arbre cannelé (11a, 11b), et on renouvelle l'opération pour chaque paire de nouveau tronçon,
- on procède au démontage du fourreau protecteur (14a, 14b) de chaque arbre et du calibre (15),
- on remet en place le palier (1, 2) correspondant à chaque extrémité des arbres (11a, 11b),
- et enfin, on effectue le remontage de l'ensemble vis-palier dans la machine d'extrusion.

2.- Procédé selon la revendication 1, caractérisé en ce que, pour l'extraction des tronçons (12) de chaque vis (10a, 10b) on monte sur le tronçon à extraire une coquille (65) formée de deux demi-coquilles symétriques (65a, 65b) ayant un profil interne correspondant au profil externe dudit tronçon, puis on emmanche sur les deux demi-coquilles (65a, 65b) un porte-coquille (60), on fixe sur la table de travail, de chaque côté de la vis (10a, 10b), un organe de butée (40) en contact avec le porte-coquille (60), et on exerce sur l'arbre de la vis une traction axiale de manière que le tronçon (12) à extraire soit maintenu en position par les organes de butée (40) et glisse sur l'arbre (11a, 11b).

3.- Installation de montage et démontage des vis d'une machine d'extrusion pour la mise en oeuvre du procédé selon la revendication 1, caractérisée en ce qu'elle comprend un moyen de levage (3) de l'ensemble vis-palier de la machine d'extrusion, une table de travail (20) munie d'organes réglables (25, 26, 28) du support desdites vis, un ensemble d'extraction (40, 50, 60, 65) des tronçons de vis (12), un lève-tronçon simple (70) pour la dépose de chaque tronçon extrait de l'arbre cannelé (11a, 11b) de la vis (10a, 10b), et un lève-tronçon double (76) pour emmancher simultanément un nouveau tronçon (12) sur les deux arbres cannelés des vis.

4.- Installation selon la revendication 3, caractérisée en ce que la table de travail (20) comporte un plateau horizontal (23) sur lequel sont ménagés sur toute sa longueur et de part et d'autre de l'axe longitudinal des petits trous (24) pour positionner sur ledit plateau horizontal à différents emplacements, en fonction des opérations à effectuer, l'organe support (25) et l'ensemble d'extraction des tronçons de vis.

5.- Installation selon la revendication 3, caractérisée en ce que les organes support (26, 28) sont réglables en hauteur et en ce que les organes supports (25, 26, 28) sont munis soit d'une tête double (25a, 26a, 28a) pour recevoir les deux vis (10a, 10b) ou soit d'une tête simple (25b, 26b, 28b) pour recevoir une seule vis.

6.- Installation selon la revendication 3, caractérisée en ce que l'ensemble d'extraction des tronçons de vis (12) comporte une coquille (65) dont le profil interne correspond au profil externe du tronçon de vis (12) à extraire, un porte-coquille (60), au moins deux organes de butée (40) et un système (50) de traction de l'arbre (11a, 11b) de la vis (10a, 10b).

7.- Installation selon la revendication 6, caratérisée en ce que la coquille (65) est formée d'au moins deux demi-coquilles (65a, 65b) obtenues à partir d'un matériau composite.

8.- Installation selon la revendication 6, caractérisée en ce que chaque organe de butée est constitué d'une équerre (40) comportant à sa base des moyens (41) de fixation dans les petits trous (24) de la table de travail (20) et à sa partie supérieure une vis horizontale (42) d'appui réglable axialement.

9.- Installation selon la revendication 6, caractérisée en ce que le système de traction (50) comprend un socle (51) muni d'un support vertical (52) de l'arbre cannelé (11a, 11b) de la vis d'extrusion (10a, 10b) et d'une butée (53), ledit système de traction comprenant également deux tirants (54) longitudinaux et parallèles solidaires entre eux à l'une de leurs extrémités par une bague (55) et à l'autre extrémité par une butée (56).

10.- Installation selon la revendication 9, caractérisée en ce qu'un vérin (57) est intercalé entre la butée (53) solidaire du socle (51) et la butée (56) solidaire des deux tirants (54).

11.- Installation selon les revendications 9 et 10, caractérisée en ce que la bague (55) est munie d'un logement interne (55a) pour recevoir une collerette (13a, 13b) prévue sur l'arbre cannelé (11a, 11b) et pour transmettre audit arbre cannelé l'effort de traction sous l'action du vérin (57) et des deux tirants (54).

12.- Installation selon la revendication 3, caractérisé en ce que le lève-tronçon simple (70) comporte un cylindre (74) dont le diamètre externe correspond au diamètre interne des tronçons de vis (12) et en ce que le lève-tronçon double (76) comporte deux cylindres parallèles (80, 81) dont les diamètres externes correspondent au diamètre interne des tronçons de vis (12).

**Patentansprüche**

1. Verfahren zum Montieren und Demontieren von Schnecken eines Extruders mit zwei Schnecken (10a, 10b), die in Drehung versetzt und an jedem ihrer Enden durch ein Lager (1, 2) geführt werden, wobei jede Schnecke aus einer zentralen Antriebswelle (11a, 11b) gebildet ist, auf der eine Mehrzahl von hohlen Abschnitten (12) aufgebracht sind, die an ihrer inneren Seitenwand Kerben aufweisen, die in entsprechenden Einschnitten (16a, 16b) der zentralen Welle eingreifen, und an ihrem Umfang Wirkungsorgane aufweisen, wie Schraubengänge, dadurch gekennzeichnet, daß:

– mit Hilfe einer Anhebeeinrichtung (3) die Anordnung Schnecke–Lager aus der Extrusionsmaschine entnommen wird, und diese Anordnung auf einem Arbeitstisch (20), der vorher vorbereitet wurde, abgesetzt wird, um gleichzeitig die beiden Schnecken (10a, 10b) aufzunehmen und der mit Einstellorganen (25, 26, 28) der Stützung der genannten Schnecken versehen ist,

– die Demontage der Lager (1, 2) ausgeführt wird, und an einem der Enden der beiden Wellen (11a, 11b) ein Kaliber (15) der Wiedergewinnung der Stellung der Einschnitte und der Halterung der Zwischenachse der Schnecke eingesetzt wird und auf das andere Ende ein Schutzfutteral (14a, 14b) gesetzt wird,

– eine Dimensionskontrolle der Schraubengänge der Schneckenabschnitte (12) durchgeführt wird, um die defekten Abschnitte zu bestimmen und sie wiederherzustellen bzw. auszutauschen,

– die Schnecken (10a, 10b) von dem Arbeitstisch (20) entfernt werden, und der Arbeitstisch für die Anordnung einer Schnecke vorbereitet wird,

– die erste Schnecke (10a) auf dem Arbeitstisch abgesetzt wird und das aufeinanderfolgende Abziehen der Abschnitte (12) mit Hilfe eines geeigneten Werkzeugs (40, 50, 60, 65) und einem einfachen Hülsenheber bzw. -aufnehmer (70) vorgenommen wird, und danach derselbe Vorgang für die zweite Schnecke (10b) erfolgt,

– sodann, nachdem die zweite gekerbte Welle (11b) vom Arbeitstisch (20) abgezogen wurde, der genannte Tisch für das Anordnen der beiden mit Einschnitten versehenen Wellen (11a, 11b) vorbereitet wird,

– die beiden mit Einschnitten versehenen Wellen (11a, 11b) auf dem Arbeitstisch (20) abgesetzt werden, und auf einem ihrer Enden das Kaliber (15) aufgesetzt wird, um die mit Einschnitten versehenen Wellen bezüglich der Ursprungsstellung der Einschnitte zu positionieren,

– gleichzeitig, mittels eines doppelten Hülsenentferners (76) ein neuer Abschnitt auf jede mit Einschnitten versehene Welle (11a, 11b) aufgestülpt wird, und der Vorgang für jedes Paar von neuen Abschnitt wiederholt wird,

– die Demontage des Schutzfutterals (14a, 14b) einer jeden Welle und des Kalibers (15) vorgenommen wird,

– das Lager (1, 2) entsprechend an jedem Enden der Wellen (11a, 11b) zurückgesetzt wird, und

– schließlich die Wiedermontage der Anordnung Schnecke–Lager in der Extrusionsmaschine vorgenommen wird.

2. Verfahren nach Anspruch 1, dadurch gekennzeichnet, daß für das Abziehen der Abschnitte (12) von jeder Schnecke (10a, 10b) auf jedem abzuziehenden Abschnitt eine Schieberbacke bzw. Kokille (65), aufgesetzt wird, die aus zwei symmetrischen Halbkokillen (65a, 65b) gebildet ist, die ein Innenprofil aufweisen, das dem Außenprofil des Abschnitts entspricht, sodann auf die beiden Halbkokillen (65a, 65b) eine Tragkokille (60) aufgestülpt wird, auf dem Arbeitstisch auf jeder Seite der Schnecke (10a, 10b) ein Anschlagorgan (40) in Berührung mit der Tragkokille (60) befestigt wird, und auf die Welle der Schnecke ein axialer Zug derart aufgebracht wird, daß der abzuziehende Abschnitt (12) in Stellung gehalten wird durch die Anschlagorgane (40) und auf der Welle (11a, 11b) gleitet.

3. Anlage zur Montage und Demontage von Schnecken einer Extrusionsmaschine für die Durchführung des Verfahrens nach Anspruch 1, dadurch gekennzeichnet, daß sie eine Anhebeeinrichtung (3) der Anordnung Schnecke–Lager der Extrusionsmaschine, einen Arbeitstisch (20), der mit Einstellorganen (25, 26, 28) der Stütze der genannten Schnecken versehen ist, eine Abziehanordnung (40, 50, 60, 65) der Schneckenabschnitte (12), einen einfachen Abschnittheber oder -aufnehmer (70), für das Absetzen eines jeden von der mit Einschnitten versehenen Welle (11a, 11b) der Schnecke (10a, 10b) abgezogenen Abschnitts, und einen doppelten Abschnittaufnehmer (76) aufweist, um gleichzeitig einen neuen Abschnitt (12) auf die beiden mit Einschnitten versehenen Wellen der Schnecken aufzustülpen.

4. Anlage nach Anspruch 3, dadurch gekennzeichnet, daß der Arbeitstisch (20) eine horizontale Platte (23) aufweist, auf der über ihre ganze Länge und beiderseits der Längsachse kleine Löcher (24) ausgebildet sind, um auf der genannten horizontalen Platte an verschiedenen Stellen in Abhängigkeit der auszuführenden Vorgänge das Stützorgan (25) und die Abziehanordnung der Abschnitte der Schnecke zu positionieren.

5. Anlage nach Anspruch 3, dadurch gekennzeichnet, daß die Stützorgane (26, 28) in der Höhe einstellbar sind, und daß die Stützorgane (25, 26, 28) entweder mit einem doppelten Kopf (25a, 26a, 28a) um die beiden Schnecken (10a, 10b) aufzunehmen, oder mit einem einfachen Kopf (25b, 26b, 28b) um eine einzelne Schnecke aufzunehmen, versehen sind.

6. Anlage nach Anspruch 3, dadurch gekennzeichnet, daß die Abziehanordnung der Schneckenabschnitte (12) eine Kokille (65) aufweist, deren inneres Profil dem Außenprofil der abzuziehenden Schneckenabschnitte (12) entspricht, eine Tragkokille (60) aufweist, wenigstens zwei Anschlagorgane (40) und ein Antriebssystem (50) der Welle (11a, 11b) der Schnecke (10a, 10b) aufweist.

7. Anlage nach Anspruch 6, dadurch gekennzeichnet, daß die Kokille (65) aus wenigstens zwei Halbkokillen (65a, 65b) gebildet ist, die ausgehend von einem Verbundwerkstoff erhalten sind.

8. Anlage nach Anspruch 6, dadurch gekennzeichnet, daß jedes Anschlagorgan aus einem Winkel (40) gebildet ist, der an seiner Basis Festlegungseinrichtungen (41) in den kleinen Löchern (24) des Arbeitstisches (20) und an seinem oberen Bereich eine horizontale axial einstellbare Anschlagschraube (42) aufweist.

9. Anlage nach Anspruch 6, dadurch gekennzeichnet, daß das Antriebssystem (50) einen Sockel (51) aufweist, der mit einer Vertikalstütze (52) der mit Einschnitten versehenen Welle (11a, 11b) der Extrusionsschnecke (10a, 10b) und mit einem Anschlag (53) versehen ist, wobei das Antriebssystem auch zwei längliche und parallele Spannstangen (54) aufweist, die untereinander an einem ihrer Enden durch einen Ring (55) und am anderen Ende durch einen Anschlag (56) verbunden sind.

10. Anlage nach Anspruch 9, dadurch gekennzeichnet, daß ein Stelltrieb (57) zwischen dem Anschlag (53), der mit dem Sockel (51) verbunden ist, und dem Anschlag (56) angeordnet ist, der mit den beiden Spannstangen (54) verbunden ist.

11. Anlage nach Anspruch 9 oder 10, dadurch gekennzeichnet, daß der Ring (55) mit einer inneren Aufnahme (56a) versehen ist, um einen Kragen (13a, 13b) aufzunehmen, der an der mit Einschnitten versehenen Welle (11a, 11b) vorgesehen ist, und zum Übertragen auf die genannte mit Einschnitten versehene Welle der Traktionskraft unter Wirkung des Stelltriebs (57) und der beiden Stellbolzen (54).

12. Anlage nach Anspruch 3, dadurch gekennzeichnet, daß die einfache Abschnittaufnahme (70) einen Zylinder (74) aufweist, deren Außendurchmesser dem Innendurchmesser der Schneckenabschnitte (12) entspricht, und daß die doppelte Abschnitt-Anhebevorrichtung (76) zwei parallele Zylinder (80, 81) aufweist, deren Außendurchmesser dem Innendurchmesser der Schneckenabschnitte (12) entsprechen.

**Claims**

1. Method for mounting and removing screws of an extrusion machine comprising two screws (10a, 10b) driven in rotation and guided at each of their ends by a bearing (1, 2) each screw consisting of a central drive shaft (11a, 11b) on which are mounted a plurality of hollow sections (12) provided on their inner walls with grooves engaging with corresponding splines (16a, 16b) on the central shaft and, on their periphery, with treating means such as helical flights, characterised in that:

- the screw-bearing assembly of the extrusion machine is extracted with the aid of a hoisting means and this assembly is placed on a work bench (20) previously prepared for simultaneously receiving the two screws (10a, 10b) and provided with adjustable support means (25, 26, 28) for said screws,

- the bearings (1, 2) are removed and on one end of the two shafts (11a, 11b) is placed a jig (15), for locating the position of the splines and for maintaining the distance between the axes of the screws and on the other end is placed a protective sleeve (14a, 14b),

- the dimensions of the flights of the screw sections (12) are checked in order to determine defective sections which have to be repaired or replaced,

- the screws (10a, 10b) are removed from the work bench (20) and the work bench is prepared for placing a screw in position,

- the first screw (10b) is placed on the work bench and the sections (12) are successively extracted using suitable tooling (40, 50, 60, 65) and a single section hoisting device (70), and then the same operation is carried out on the second screw (10b),

- then, after the second splined shaft (11b) has been removed from the work bench (20), this bench is prepared for the positioning of the two splined shafts (11a, 11b),

- the two splined shafts (11a, 11b) are placed on the work bench (20) and the jig (15) is put back in position on one of their ends in order to position said splined shafts relative to the original position of the splines,

- simultaneously by means of a double-section-hoisting device (76), a new section is slid onto each splined shaft (11a, 11b) and the operation is repeated for each pair of new sections,

- the protectiove sleeve (14a, 14b) and the jig (15) are removed from each shaft,

- the bearing (1, 2) corresponding to each end of the shafts (11a, 11b) is put back in position,

- and finally the screw-bearing assembly is reinstalled in the extrusion machine.

2. Method according to claim 1, characterised in that, for the extraction of the sections (12) of each screw (10a, 10b), there is mounted on the section to be extracted a shell (65) formed by two symmetrical half-shells (65a, 65b) having an inner profile corresponding to the outer profile of said section, then a shell holder (60) is mounted on the half-shells (65a, 65b), an abutment element (40) in contact with the shell holder (60) is fixed to the work bench on each side of the screw (10a, 10b) and axial traction si exerted on the shaft of the screw so that the section (12) to be extracted is held in position by the abutment elements (40) and slides along the shaft (11a, 11b).

3. Installation for mounting and removing screws of an extrusion machine for carrying out the method according to claim 1, characterised in that it comprises means (3) for hoisting the screw-bearing assembly of the extrusion machine, a work bench (20) provided with adjustable means (25, 26, 28) for supporting said screws, an assembly (40, 50, 60, 65) for extracting screw sections (12), a single-section hoisting device (70) for removing each section extracted from the splined shaft (11a, 11b) of the screw (10a, 10b) and a double-section hoisting device (76) for simultaneously mounting a new section (12) on the two splined shafts of the screws.

4. Installation according to claim 3, characterised in that the work bench (20) comprises a horizontal platform (23) on which are provided, over its entire length and on each side of the longitudinal axis, small apertures (24) for positioning the support means (25) and the assembly for extracting the screw sections on the horizontal platform at different places, according to the operations to be carried out.

5. Installation according to claim 3, characterised in that the support means (26, 28) are adjustable in height and the support means (25, 26, 28) are provided either with a double head (25a, 26a, 28a) for receiving the two screws (10a, 10b) or with a single head (25b, 26b, 28b) for receiving a single screw.

6. Installation according to claim 3, characterised in that the screw section extracting assembly comprises a shell (65) whose inner profile corresponds to the outer profile of the screw section (12) to be extracted, a shell holder (60), at least two abutment elements (40) and a traction system (50) for the shaft (11a, 11b) of the screw (10a, 10b).

7. Installation according to claim 6, characterised in that the shell (65) is formed by at least two half-shells (65a, 65b) obtained from a composite material.

8. Installation according to claim 6, characterised in that each abutment element consists of a bracket (40) having at the base thereof means (41) for fixing in the small apertures (24) of the work bench (20) and in its upper part an axially adjustable horizontal thrust screw (42).

9. Installation according to claim 6, characterised in that the traction system (50) comprises a base (51) provided with a vertical support (52) for the splined shaft (11a, 11b) of the extrusion screw (10a, 10b) and an abutment (53), said traction system further comprising two longitudinal and parallel tie bars (54) interconnected at one of their ends by a ring (55) and at the other end by an abutment (56).

10. Installation according to claim 9, characterised in that a jack (57) is interposed between the abutment (53) connected to the base (51) and the abutment (56) connected to the two tie bars (54).

11. Installation according to claims 9 and 10, characterised in that the ring (55) is provided with an inner cavity (55a) for receiving a flange (13a, 13b) provided on the splined shaft (11a, 11b) for transmitting to said splined shaft the traction force under the action of the jack (57) and the two tie bars (54).

12. Installation according to claim 3, characterised in that the single-section hoisting device (70) comprises a cylinder (74) whose external diameter corresponds to the internal diameter of the screw sections (12) and the double-section hoisting device (76) comprises two parallel cylinders (80, 81) whose external diameters correspond to the internal diameter of the screw sections (12).

**FIG.1**

EP 0 271 399 B1

**FIG.2**

EP 0 271 399 B1

FIG.3

FIG.4

**FIG.5**

**FIG.6**

**FIG.7**

**FIG. 8**

**FIG. 9**

EP 0 271 399 B1

**FIG.10**

**FIG.11**

**FIG.12**

**FIG.13**

**FIG.14**

EP 0 271 399 B1

**FIG. 15**

**FIG.16**